# EUROPÄISCHE PATENTSCHRIFT

(11) **EP 2 744 865 B1**
(45) Veröffentlichungstag und Bekanntmachung des Hinweises auf die Patenterteilung: **26.10.2016**
(21) Anmeldenummer: 12750584.0
(22) Anmeldetag: 17.08.2012
(51) Int. Cl.: C09J 7/02, B05D 5/10

(54) **VERFAHREN ZUR HERSTELLUNG EINES KLEBEBANDES**
METHOD FOR PRODUCING AN ADHESIVE TAPE
PROCÉDÉ DE FABRICATION D'UN RUBAN ADHÉSIF

(30) Priorität: 18.08.2011 DE 102011052821
(43) Veröffentlichungstag der Anmeldung: 25.06.2014
(73) Patentinhaber: certoplast Vorwerk & Sohn GmbH, 42285 Wuppertal (DE)
(72) Erfinder: MEIER, Thorsten, 40479 Düsseldorf (DE); RAMBUSCH, Peter, 42115 Wuppertal (DE); RUHNAU, Kay, 42349 Wuppertal (DE)
(74) Vertreter: Nunnenkamp, Jörg
(86) Internationale Anmeldenummer: PCT/EP2012/066078
(87) Internationale Veröffentlichungsnummer: WO 2013/024150

(56) Entgegenhaltungen:
- EP-A2- 1 431 360

## Beschreibung

Die Erfindung betrifft ein Verfahren zur Herstellung eines Klebebandes, mit einem bandförmigen Träger, und mit zumindest einem Klebstoffstreifen, welcher wenigstens einseitig auf dem Träger aufgebracht wird, mit folgenden Verfahrensschritten:
- Eine Trägerbahn wird von einer Vorratseinheit ausgehend zumindest einer Beschichtungseinheit zugeführt;
- die Beschichtungseinheit erzeugt auf der Trägerbahn in ihrer Längserstreckung den wenigstens einen Klebstoffstreifen durch Beschichten mit einem Kleber; wobei
- der Kleber kontaktlos auf die Trägerbahn aufgebracht wird;
- die Trägerbahn wird in Längsrichtung in die einzelnen Klebebänder geschnitten, wobei die Schritte 2 und 4 auch in umgekehrter Reihenfolge durchlaufen werden können.

Ein derartiges Verfahren wird beispielsweise in der gattungsbildenden EP 1 431 360 A2 beschrieben. Hier geht es um ein auf sich selbst wickelbares Klebeband, welches mit dem zugehörigen Klebstoff unter Rückgriff auf eine Breitschlitzdüse beschichtet werden kann. Das beschichtete Trägermaterial wird abschließend in einer Variante in schmale Streifen geschnitten und zu kurzen Rollen aufgewickelt.

Ein anderes Verfahren zur Herstellung eines Klebebandes wird in der DE 103 09 447 A1 beschrieben. Üblicherweise werden Klebebänder so hergestellt, dass auf den bandförmigen Träger bzw. eine Trägerbahn eine vollflächige Beschichtung ein- oder beidseitig aufgetragen wird. Anschließend wird das solchermaßen beschichtete Trägermaterial bzw. die Trägerbahn auf eine sogenannte Mutterrolle aufgerollt, aus welcher dann einzelne Klebebandrollen mit dem darauf gewickelten Klebeband (in deren Quererstreckung) geschnitten oder gestochen werden.

Im Stand der Technik nach der DE 103 09 447 A1 wird so vorgegangen, dass das Trägermaterial bzw. die Trägerbahn an einer Tauchwalze vorbeigeführt wird, die in Kontakt mit der Trägerbahn steht. Die Tauchwalze rotiert in einem Bad mit Klebemasse. Auf diese Weise wird die Klebemasse auf die Walzenoberfläche übertragen. Dadurch können einzelne Klebstoffstreifen auf der Trägerbahn definiert werden. Selbstverständlich ist auch eine vollflächige Beschichtung der Trägerbahn mit dieser Vorgehensweise möglich.

Im weiteren Stand der Technik nach der Gebrauchsmusterschrift DE 20 2010 014 239 U1 der Anmelderin wird ein Klebeband beschrieben, bei dem der Klebstoffstreifen zwischen ca. 20% und 50% der Fläche der zugehörigen Trägerseite bedeckt. Auf diese Weise kann das Klebeband als Wickelband zur Realisierung einer Schlauchummantelung besonders vorteilhaft verwendet werden. Denn diese Schlauchummantelung besteht im Wesentlichen aus einem wendelförmig um das oder die Kabel oder allgemein das Wickelgut herum geführten sowie miteinander verklebten Klebeband mit dem beschriebenen Klebstoffstreifen. Dabei wird besonders vorteilhaft mit zwei Klebstoffstreifen gearbeitet, und zwar einem Klebstoffstreifen auf der Trägeroberseite des Trägers und einem Klebstoffstreifen auf der Trägerunterseite des Trägers. Das hat sich grundsätzlich bewährt.

Die bisherigen und in der Praxis eingesetzten Vorgehensweisen bei der Herstellung solcher Klebebänder sind jedoch mit Problemen behaftet. So lässt sich mit Hilfe der Tauchwalzen entsprechend der DE 103 09 447 A1 kein Klebstoffstreifen fest umrissener Dimension realisieren, weil der Tauch- und Übertragungsvorgang mit Ungenauigkeiten behaftet ist. Außerdem ist der anlagentechnische Aufwand beträchtlich. Hinzu kommt, dass die einzelnen Klebstoffstreifen bei der bekannten Vorgehensweise nach der DE 103 09 447 A1 in Längserstreckung der Trägerbahn "verlaufen" können, d. h. im Vergleich zu der betreffenden Längserstreckung ihre Position unter Umständen nicht beibehalten. Das ist dann nachteilig, wenn die Trägerbahn anschließend zu der bereits beschriebenen Mutterrolle aufgerollt wird, aus welcher dann die jeweiligen Klebebandrollen geschnitten oder gestochen werden.

Denn etwaige Ungenauigkeiten in der Positionierung des Klebstoffstreifens auf der zugehörigen Trägerseite führen unter Umständen dazu, dass eine mit einem solchen Klebeband herzustellende Schlauchummantelung entsprechend der Lehre nach dem Gebrauchsmuster DE 20 2010 014 239 U1 nicht oder nicht einwandfrei realisiert werden kann. Außerdem besteht die Gefahr, dass der nicht exakt positionierte Klebstoffstreifen möglicherweise bei einer herzustellenden Schlauchummantelung dennoch mit den zu ummantelnden Kabeln in Kontakt tritt, was eigentlich vermieden werden soll. Ebenso führt eine ungenaue Positionierung des Klebestreifens unter Umständen zur Außenklebrigkeit des fertigen Schlauches. Hier will die Erfindung insgesamt Abhilfe schaffen.

Der Erfindung liegt das technische Problem zugrunde, ein derartiges Verfahren zur Herstellung eines Klebebandes so weiterzuentwickeln, dass der anlagentechnische Aufwand verringert ist und der zumindest eine aufgebrachte Klebstoffstreifen positionsstabil auf den bandförmigen Träger aufgebracht wird. Insbesondere soll das bereits beschriebene "Verlaufen" minimiert bzw. möglichst gänzlich vermieden werden.

Zur Lösung dieser technischen Problemstellung ist ein gattungsgemäßes Verfahren zur Herstellung eines Klebebandes im Rahmen der Erfindung dadurch gekennzeichnet, dass die Trägerbahn im Bereich der Beschichtungseinheit im Wesentlichen vertikal oder nahezu vertikal geführt wird.

Grundsätzlich kann mit Blick auf die beiden zuvor angegebenen Verfahrensschritte 2 und 4 auch umgekehrt vorgegangen werden. Dann wird mit folgenden Verfahrensschritten gearbeitet:
- eine Trägerbahn wird von einer Vorratseinheit ausgehend zumindest einer Beschichtungseinheit zugeführt;
- die Trägerbahn wird in Längsrichtung in die einzelnen Klebebänder geschnitten und
- die Beschichtungseinheit erzeugt auf der jeweiligen (und geschnittenen) Trägerbahn in ihrer Längserstreckung den wenigstens einen Klebestreifen durch Beschichten mit einem Kleber.

Durch die beschriebene Vorgehensweise lässt sich ein Klebeband mit dem gewünschten Klebstoffstreifen beschichten, welcher dimensions- und ausrichtungsstabil seine Position im Vergleich zum bandförmigen Träger in dessen Längserstreckung durchweg beibehält. Auf diese Weise kann mit dem beschriebenen Verfahren besonders vorteilhaft ein Klebeband hergestellt werden, wie es in dem einleitend bereits genannten Gebrauchsmuster DE 20 2010 014 239 U1 beschrieben wird. Mit einem solchen Klebeband lässt sich folglich problemlos die dort ebenfalls in Bezug genommene Schlauchummantelung realisieren.

Bei dem eingesetzten Kleber bzw. Klebemittel kann es sich grundsätzlich um jeden Kleber bzw. Klebstoff handeln, der mit Hilfe der Beschichtungseinheit erfindungsgemäß kontaktlos auf die Trägerbahn aufgebracht wird bzw. aufgebracht werden kann. Selbstverständlich ist auch ein Auftrag des Klebers bzw. Klebemittels mit Kontakt möglich, wird von der Erfindung allerdings nicht mit umfasst. Denn die Beschichtungseinheit arbeitet kontaktlos, tritt also mit der zu beschichtenden Trägerbahn nicht in mechanischen Kontakt. Geeignete Kleber sind hier beispielsweise Dispersionskleber, Schmelzkleber, Sprühkleber etc.. Das heißt, die Beschichtungseinheit kann grundsätzlich als Sprühdüse, Auftragsdüse oder auch Gießeinrichtung ausgelegt sein (beispielsweise im Zuge einer Curtain-Coating-Beschichtung).

Außerdem wird die zu beschichtende Trägerbahn erfindungsgemäß im Bereich der Beschichtungseinheit im Wesentlichen vertikal oder nahezu vertikal geführt. Die im Wesentlichen vertikale oder nahezu vertikale Führung der Trägerbahn im Bereich der Beschichtungseinheit stellt in diesem Zusammenhang sicher, dass der mit Hilfe der Beschichtungseinheit jeweils erzeugte Klebstoffstreifen oder die mehreren Klebstoffstreifen auf der Trägerbahn in Längsrichtung der Trägerbahn gesehen nicht "verlaufen".

Das heißt, der mit Hilfe der Beschichtungseinheit erzeugte wenigstens eine Klebstoffstreifen auf der Trägerbahn behält typischerweise seine Position im Vergleich zu der Trägerbahn bei. Etwaige Ränder des Klebstoffstreifens verfügen folglich über einen gleichbleibenden oder nahezu gleichbleibenden Abstand im Vergleich zum zugehörigen Rand der Trägerbahn. Das gilt sowohl für den Fall, dass die Trägerbahn vollflächig mit dem Kleber beschichtet wird, also der Klebstoffstreifen die Trägerbahn vollflächig bedeckt. Ebenso dann, wenn mehrere voneinander beabstandete Klebstoffstreifen in Längserstreckung der Trägerbahn mit Hilfe der Beschichtungseinheit erzeugt werden. - Tatsächlich kommt es bei der beschriebenen Vorgehensweise nämlich nur darauf an, dass die Trägerbahn ihre senkrechte Richtung bzw. Transportrichtung gegenüber der quer erstreckten Beschichtungseinheit beibehält. Das lässt sich durch Führungsrollen oder geeignete Führungsmittel problemlos bewerkstelligen.

Bei der Behandlung der beschichteten Trägerbahn sind verschiedene Möglichkeiten denkbar. So kann die mit dem Kleber beschichtete Trägerbahn insbeson dere kantengenau aufgewickelt werden. Im Anschluss hieran wird dann die fertige Rolle gestochen, das heißt die Rolle wird quer zu ihrer Längserstreckung in verschiedene Rollen mit den gewünschten Klebstoffstreifen kleingeschnitten.

Alternativ hierzu ist es aber auch möglich, dass die beschichtete Trägerbahn kantengenau geschnitten wird. Das heißt die jeweilige und zugehörige Schnittkante wird erst beim eigentlichen Schneidevorgang der Trägerbahn erzeugt. Dabei kann mit oder ohne Überschuss bzw. Abfall gearbeitet werden. In erstgenanntem Fall wird der Klebstoffstreifen bewusst mit Hilfe der Beschichtungseinheit etwas breiter definiert, als er beim fertigen Klebeband benötigt wird. Dann können auch etwaige Ungenauigkeiten beim Auftrag des Klebstoffstreifens ausgeglichen werden.

Die an zweiter Stelle genannte Alternative lässt sich beispielsweise so realisieren, dass die beschichtete Trägerbahn im Bereich des Klebstoffstreifens geschnitten wird, und zwar ohne Überschuss bzw. Abfall. Beispielsweise mag die beschichtete Trägerbahn mittig des Klebstoffstreifens geschnitten werden. Dadurch lassen sich Klebebänder und folglich Rollen mit den Klebebändern erzeugen, die gegenläufig aufgewickelt werden können. Grundsätzlich ist es in diesem Zusammenhang auch möglich, beispielsweise ein vollflächig beschichtetes Klebeband neben teilbeschichteten Klebebändern auf einer (einzigen) durchgängigen Trägerbahn zu definieren.

In diesem Kontext schlägt die Erfindung vor, dass die Trägerbahn in ihrer Längserstreckung mit unterschiedlichen Klebstoffstreifen auf ihrer Trägeroberseite und/oder Trägerunterseite beschichtet wird. Beispielsweise mag die Trägerbahn in ihrer Längserstreckung in wenigstens einem Bereich vollflächig beschichtet werden. Darüber hinaus mag zumindest ein weiterer zweiter Bereich teilbeschichtet sein bzw. eine lediglich teilflächige Beschichtung aufweisen. Die einzelnen Bereiche in Längserstreckung der Trägerbahn können zu unterschiedlichen Klebebändern korrespondieren. Um diese zu nutzen, wird die Trägerbahn typischerweise in Querrichtung geschnitten.

Das heißt, die eigentliche Trennung in die einzelnen gewünschten Klebebänder erfolgt dann mit Hilfe eines kantengenauen Schnittvorganges. Der Schnitt kann dabei in Längsrichtung und/oder Querrichtung der Trägerbahn erfolgen. Dabei lässt sich eine zugehörige Schneidvorrichtung exakt gegenüber der Trägerbahn ausrichten, beispielsweise durch eine Abstandsmessung zur Kante der Trägerbahn mit Hilfe eines Lasers. Eine solche Abstandsmessung kann auch der Beschichtungseinheit zugeordnet sein. In diesem Fall ist die Beschichtungseinheit zumindest axial verstellbar ausgelegt, so dass sich grundsätzlich auch wellenförmige Klebestreifen auf der Trägerbahn realisieren lassen. Auch eine Querverstellung der Beschichtungseinheit, das heißt quer zur Längserstreckung der Trägerbahn, ist möglich und wird von der Erfindung umfasst.

Generell können die Beschichtungseinheit und die Trägerbahn relativ zueinander bewegt werden. Dabei wird man im Allgemeinen die Trägerbahn zumindest im Bereich der Beschichtungseinheit im Wesentlichen vertikal oder nahezu vertikal führen. Die Beschichtungseinheit lässt sich demgegenüber horizontal oder überwiegend horizontal verstellen bzw. in Axialrichtung. Grundsätzlich ist es natürlich auch möglich, die Trägerbahn und die Beschichtungseinheit in gleicher Richtung bewegen zu können. Im Allgemeinen ist die Beschichtungseinheit jedoch ortsfest gegenüber der demgegenüber vertikal geführten Trägerbahn ausgelegt und lässt sich allenfalls axial bzw. horizontal zu der vertikal bewegten Trägerbahn verstellen.

Typischerweise sorgt die wenigstens eine Beschichtungseinheit dafür, dass sämtliche Klebstoffstreifen auf der Trägerbahn in einem Zug definiert werden. Wie bereits erläutert, kann es sich bei den Klebstoffstreifen um einen Klebstoffstreifen für ein vollflächig beschichtetes Klebeband und ein oder mehrere Klebstoffstreifen für ein teilbeschichtetes Klebeband handeln, die gemeinsam auf einer durchgängigen Trägerbahn definiert werden und erst anschließend in die gewünschten Klebebänder geschnitten werden. In diesem Fall ist die Beschichtungseinheit an die Breite der Trägerbahn angepasst und verfügt über eine korrespondierende Querausdehnung. Für den Fall, dass an dieser Stelle eine Düse als Beschichtungseinheit zum Aufbringen von beispielsweise einem Schmelzkleber vorgesehen ist, reicht es aus, wenn eine der Düse vorgeschaltete Schablone an die Breite der Trägerbahn angepasst ist und die erforderliche Querausdehnung aufweist. Selbstverständlich kann alternativ oder zusätzlich auch mit einer der Düse nachgeschalteten Schablone gearbeitet werden.

Tatsächlich sorgt die fragliche und ausgangsseitige Schablone im Allgemeinen dafür, dass auf diese Weise einzelne und voneinander beabstandete Klebstoffstreifen realisiert werden können. Tatsächlich gibt die Schablone die Breite und/oder Position des jeweils erzeugten Klebstoffstreifens auf der Trägerbahn vor. Die Schablone kann selbstverständlich ausgetauscht werden, um eine Anpassung an unterschiedliche Breiten der Trägerbahnen und/oder verschiedene Anordnungen, Breiten etc. des Klebstoffstreifens realisieren zu können. Außerdem lässt sich in gewissen Grenzen mit Hilfe der Beschichtungseinheit bzw. der Düse der Flächenauftrag des Klebstoffes (Masse pro Flächeneinheit) im Bereich des Klebstoffstreifens variieren. Eine solche Variation des Flächenauftrages ist auch dadurch möglich und denkbar, dass die Förderleistung einer in diesem Fall obligatorischen Pumpe für den Kleber verändert wird.

Grundsätzlich kann die Beschichtungseinheit auch so ausgelegt sein, dass ein (geringer) gewichtsmäßiger Anteil des Klebers bzw. Klebemittels in die Trägerbahn hineingedrückt wird. In diesem Fall sorgt der Kleber also nicht nur für den gewünschten Klebstoffstreifen, sondern auch dafür, dass die Trägerbahn eine Verfestigung erfährt. Typischerweise wird man in diesem Zusammenhang mit einer Verfestigung durch eingebrachten Kleber zumindest im Bereich der nachfolgend noch zu definierenden Schnittkante oder der mehreren Schnittkanten sorgen. Dies deshalb, um anschließend eine einwandfreie Schnittkante zu erzeugen und beispielsweise keinen Faseraustritt an Material der Trägerbahn durch den Schneidvorgang hervorzurufen.

Die beschriebene Verfestigung der Trägerbahn mit Hilfe des Klebers bzw. Klebemittel ist natürlich nur eine mögliche und denkbare Variante. Denn die Verfestigung kann selbstverständlich auch unabhängig von dem Kleber bzw. Klebemittel erfolgen. So ist es beispielsweise denkbar, mit einer Beschichtung aus einem nichtklebenden Material, wie z.B. einem Acrylat oder einem anderen Polymer, zu arbeiten, um die beschriebene Verfestigung der Trägerbahn zu erreichen. Das wird in der Regel vor dem Auftrag des Klebers bzw. Klebemittels durchgeführt.

Bei dem eingesetzten Klebstoff bzw. Kleber kann es sich - wie einleitend bereits erläutert - um eine Sprühkleber, einen Schmelzkleber oder dergleichen handeln. Auch ein Dispersionskleber ist möglich und wird von der Erfindung umfasst. Wesentlich ist der Umstand, dass der Kleber mit Hilfe der Beschichtungseinheit kontaktlos aufgebracht wird, beispielsweise ohne mechanische Auftragswerke oder vergleichbare Einrichtungen. Selbstverständlich liegt auch ein Kontaktauftrag des Klebers im Rahmen der Erfindung. Sofern ein Schmelzklebstoff zum Einsatz kommt, handelt es sich vorteilhaft um einen Schmelzklebstoff auf Kautschukbasis. Der Schmelzklebstoff wird durch Erhitzen eines Granulates in den flüssigen Zustand überführt und kann dann durch die bereits angesprochene Schablone gepresst werden, welche austrittsseitig der Düse vorgesehen ist. Auf diese Weise wird der Schmelzklebstoff auf die Trägerbahn aufgebracht. Alternativ zu einem Granulat kann der Schmelzklebstoff auch in Blockgestalt geschmolzen werden.

Nach dem Aufbringen des Klebers kann dieser bei Bedarf vernetzt werden. Dabei hat sich eine Strahlenvernetzung mit Elektronenstrahlen, UV-Strahlen oder auch Röntgenstrahlen als denkbar und von der Erfindung umfasst erwiesen. Selbstverständlich lassen sich neben solchen physikalischen Vernetzungsmethoden auch chemische Vernetzungen denken und werden mit abgedeckt. Im Allgemeinen ist eine zugehörige Vernetzungseinheit meist direkt in Förderrichtung der Trägerbahn hinter der Beschichtungseinheit angeordnet. Dabei ist die Auslegung zusätzlich so getroffen, dass der jeweilige Klebstoffstreifen nach seinem Auftrag unmittelbar vernetzt wird und erst danach ein (weiterer) mechanischer Kontakt mit beispielsweise einer Walze, einer Umlenkrolle, einer Aufwickeleinheit etc. erfolgt.

Meistens sind wenigstens zwei Beschichtungseinheiten bzw. zwei Düsen realisiert. Die beiden Beschichtungseinheiten können den Träger gemeinsam auf einer Trägerseite beschichten und den einen oder die mehreren voneinander beabstandeten Klebstoffstreifen auf der Trägerbahn definieren. Im Regelfall sind die Beschichtungseinheiten jedoch im Vergleich zu dem demgegenüber mittig angeordneten Träger respektive der Trägerbahn sich gegenüberliegend angeordnet. Tatsächlich sorgt die eine Beschichtungseinheit dafür, dass die Trägeroberseite mit dem einen oder den mehreren Klebstoffstreifen ausgerüstet wird. Dagegen stellt die weitere zweite Beschichtungseinheit sicher, dass die zugehörige Trägerunterseite den einen oder die mehreren gewünschten Klebstoffstreifen aufweisen. Das heißt, mit diesen beiden Beschichtungseinheiten lassen sich problemlos Beschichtungen bandförmiger Träger realisieren, wie sie in dem bereits in Bezug genommenen Gebrauchsmuster DE 20 2010 014 239 U1 im Detail beschrieben worden sind.

Im Regelfall und wie bereits ausgeführt, wird die Trägerbahn im Bereich der einen bzw. der beiden Beschichtungseinheiten im Wesentlichen vertikal oder nahezu vertikal geführt. In Verbindung mit einer gegenüberliegend der jeweiligen Beschichtungseinheit vorgesehenen Führungsrolle stellt die Erfindung hierdurch sicher, dass die mit Hilfe der jeweiligen Beschichtungseinheit erzeugte Klebstoffschicht bzw. der Klebstoffstreifen in Längserstreckung der Trägerbahn nicht "verläuft". Das heißt, der solchermaßen erzeugte Klebstoffstreifen behält mit seinen Rändern einen zuvor eingestellten Abstand im Vergleich zu Rändern der Trägerbahn bei. Dadurch kann die beschichtete Trägerbahn besonders einfach und kantengenau nachträglich geschnitten werden.

Wie bereits erläutert, ist die Auslegung meistens so getroffen, dass der Klebstoffstreifen die zugehörige Trägerseite nur teilweise bedeckt. Meistens wird man hier so arbeiten, dass der Klebstoffstreifen zwischen 5 % und 50 % der Fläche der zugehörigen Trägerseite bedeckt. Das gilt selbstverständlich nur beispielhaft. Außerdem ist der Klebstoffstreifen meistens in Längsrichtung und randseitig des Trägers angeordnet. Darüber hinaus werden die beiden Klebstoffstreifen auf der Trägeroberseite und der Trägerunterseite überwiegend so realisiert, dass sie an sich gegenüberliegenden Trägerrändern anliegen. Darüber hinaus wird man die Klebstoffstreifen meistens so auslegen, dass eine im Wesentlichen übereinstimmende Breite beobachtet wird. Grundsätzlich sind natürlich auch unterschiedlich breit gestaltete Klebstoffstreifen von der Erfindung abgedeckt.

So kann beispielsweise ein Klebstoffstreifen breiter als der andere Klebstoffstreifen ausgelegt werden. Dadurch wird Material für den Kleber bei der Beschichtung gespart. Außerdem besteht hierdurch die Möglichkeit, dass der breite Klebstoffstreifen seine Verklebungsstärke nicht nur durch Adhäsion am Rücken des Trägers gehalten wird, sondern zusätzlich noch durch Adhäsion Kleber auf Kleber unter Berücksichtigung des schmalen Klebstoffstreifens, wenn eine Schlauchummantelung durch wendelförmiges Verkleben des Klebebandes erzeugt wird. Dadurch kann eine zusätzliche Sicherheit bei einem einseitig beschichteten Träger zur Verfügung gestellt werden.

Um die Trägerbahn in die einzelnen Klebstoffstreifen aufteilen zu können, ist eine Schneidvorrichtung vorgesehen. Diese kann beispielsweise und nicht einschränkend mit einem Messerbalken mit zugehörigen bzw. daran angebrachten rotierenden Messern arbeiten. Grundsätzlich ist auch ein Klingenschnitt mit oder ohne Gegenwalze ebenso wie ein Scherenschnitt möglich. Daneben umfasst die Erfindung aber auch Laser- oder Thermoschnitte. Die Schneidvorrichtung erstreckt sich im Allgemeinen quer zur Längserstreckung der Trägerbahn und sorgt dafür, dass die Trägerbahn problemlos in ihrer Längserstreckung in die einzelnen Klebstoffstreifen unterteilt wird. Alternativ oder zusätzlich kann die Trägerbahn auch quer in die einzelnen Klebstoffstreifen unterteilt werden. Der Abstand der einzelnen rotierenden Messer bei einem Messerbalken gibt dabei jeweils die Breite des entstehenden Klebstoffstreifens vor.

Der Träger bzw. die Trägerbahn kann ihrerseits ein- oder beidseitig, falls erforderlich, kaschiert sein. Diese Kaschierung wird regelmäßig vor dem Kleber auf die Trägerbahn aufgebracht. In diesem Zusammenhang empfiehlt es sich, einen Schnittbereich bzw. einen Bereich der anschließend definierten einen oder der mehreren Schnittkanten bzw. Schneidkanten mit einer beispielsweise nicht klebenden Beschichtung auszurüsten. Hierbei kann es sich um eine Acrylatbeschichtung handeln, um beispielsweise ein Gewebe, ein Vlies etc. als Material der Trägerbahn in dem betreffenden Schnittbereich zu verfestigen. Die Beschichtung wird dabei wie beschrieben vor Aufbringen des Klebstoffstreifens auf der Trägerbahn definiert. Dadurch wird die Schnittqualität verbessert.

Eine solche Kaschierung eröffnet darüber hinaus die Möglichkeit, den Kleber bzw. Klebstoffstreifen nur im Schnittbereich bzw. nur im Bereich der Schneidkanten zu definieren. Dadurch kann Kleber gespart werden und lässt sich eine höhere Flexibilität des nur randseitig kaschierten Klebebandes einstellen. Außerdem wird durch eine solche überwiegend vollflächige Kaschierung der Trägerbahn vor dem Auftrag des Klebers im Bereich der einen oder der mehreren Schneidkanten eine größere Dicke des auf diese Weise hergestellten Klebebandes erzielt.

Das führt zu einer gesteigerten Geräuschdämmung und einer geringeren Dichte sowie einem verminderten Gewicht im Vergleich zu Klebebändern mit ähnlicher Stärke des Trägerbandes. Außerdem beobachtet man etwaige Auflösungserscheinungen des Klebers bei Hitze nicht oder nicht mehr so stark wie bei einer Beschichtung mit dem Kleber in größerem Umfang. Das alles lässt sich beispielsweise dadurch erreichen, dass die Trägerbahn auf einer Trägerseite oder auf beiden Trägerseiten zweifach beschichtet wird, und zwar zuerst mit der Kaschierung bzw. der nicht klebenden Beschichtung und anschließend mit dem Kleber. Die Kaschierung wird dabei regelmäßig vollflächig aufgetragen, wohingegen der Kleber eine nur teilflächige Beschichtung erfährt.

In diesem Fall sind dann regelmäßig zwei Beschichtungseinheiten realisiert, nämlich eine Beschichtungseinheit zum Kaschieren und eine weitere Beschichtungseinheit zum Auftrag des Klebers. Beide Beschichtungseinheiten erzeugen auf der Trägerbahn in ihrer Längserstreckung einerseits den Kaschierstreifen und andererseits den Klebstoffstreifen.

Die Position der Beschichtungseinheit ist im Vergleich zur Trägerbahn grundsätzlich frei wählbar. Im Regelfall verfügt die Beschichtungseinheit über eine Ausrichtung quer zur Trägerbahn. Grundsätzlich ist natürlich auch eine Ausrichtung der Beschichtungseinheit in Richtung der Trägerbahn oder unter einem Winkel denkbar und wird von der Erfindung umfasst.

Für die Realisierung der mehreren Klebstoffstreifen kann auf einen jeweils übereinstimmenden Kleber bei der Beschichtung zurückgegriffen werden. Es ist aber auch denkbar, mit unterschiedlichen Klebern, beispielsweise einem Schmelzkleber und einem Dispersionskleber zu arbeiten. Auch sogenannte Reaktivkleber werden im Rahmen der Erfindung umfasst, also solche, die aus zwei nicht klebenden Komponenten bestehen und bei Berührung miteinander reagieren. Bei solchen zwei nicht klebenden Komponenten ist eventuell noch ein dritter Klebstoffstreifen nötig, um eine Abrollkraft der fertigen Klebebandrolle realisieren zu können.

Eine weitere Variationsmöglichkeit besteht darin, den jeweiligen Flächenauftrag des Klebers bei der Realisierung des zugehörigen Klebstoffstreifens zu verändern. Dadurch lassen sich insgesamt unterschiedliche Klebekräfte von Klebstoffstreifen zu Klebstoffstreifen realisieren. - Gegenstand der Erfindung ist auch eine Vorrichtung zur Herstellung eines Klebebandes, die besonders gut zur Durchführung des beschriebenen Verfahrens geeignet ist.

Im Folgenden wird die Erfindung anhand einer lediglich ein Ausführungsbeispiel darstellenden Zeichnung näher erläutert; es zeigen:
- Fig. 1: die erfindungsgemäße Vorrichtung zur Herstellung eines Klebebandes in einer Übersicht,
- Fig. 2: das auf diese Weise hergestellte Klebeband schematisch in einer Schnittdarstellung und
- Fig. 3 bis 6: unterschiedliche Vorgehensweisen beim Schneiden der Trägerbahn zur Herstellung des Klebebandes.

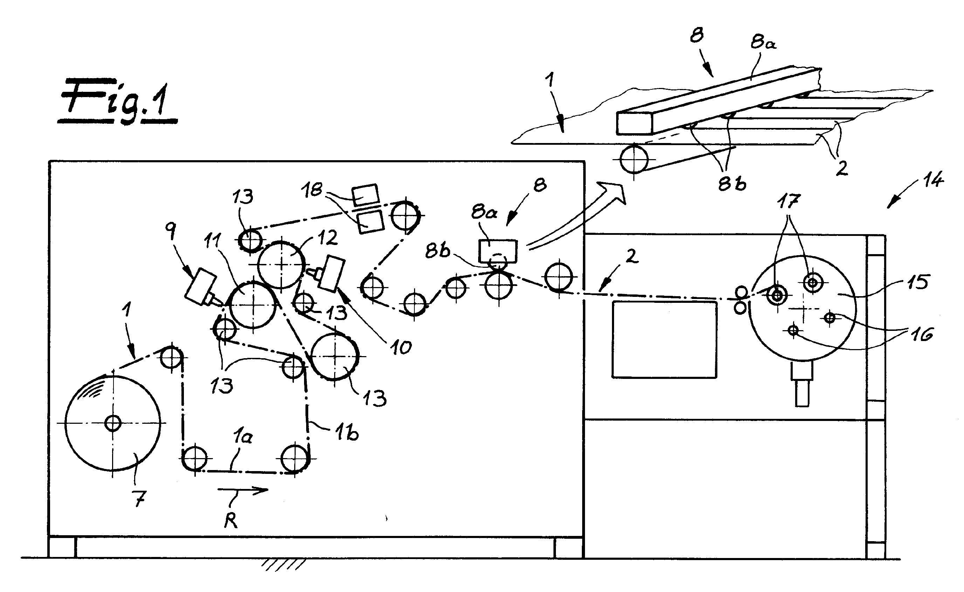

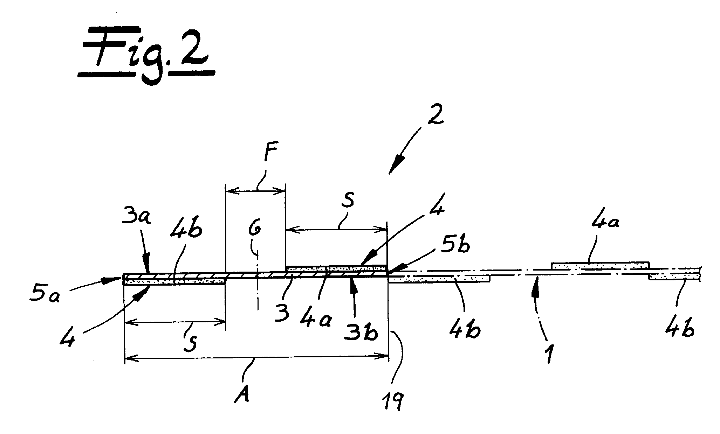

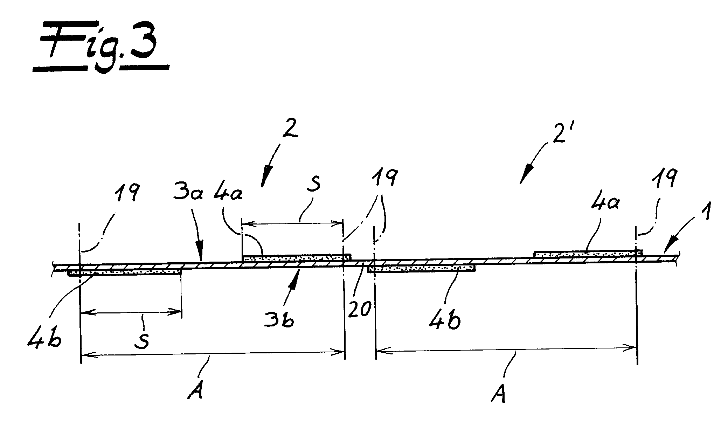

In der Fig. 1 ist eine Vorrichtung dargestellt, mit deren Hilfe aus einer Trägerbahn 1 ausgangsseitig ein oder mehrere Klebebänder 2 hergestellt werden. Der prinzipielle Aufbau des jeweiligen Klebebandes 2 ist in der Fig. 2 sowie in den Fig. 3 bis 5 bildlich dargestellt.

Tatsächlich verfügt das Klebeband 2 in seinem grundsätzlichen Aufbau über einen Träger 3 und wenigstens einen auf den Träger 3 aufgebrachten Klebstoffstreifen 4. Im Rahmen der gezeigten Variante nach Fig. 2 verfügt der Träger 3 beidseitig über einen zugehörigen Klebstoffstreifen 4. Vergleichbares gilt für die Klebebänder 2 in den Fig. 3 bis 5. Tatsächlich ist an dieser Stelle ein Klebstoffstreifen 4a auf einer Trägeroberseite 3a und ein weiterer Klebstoffstreifen 4b auf einer Trägerunterseite 3b vorgesehen.

Zur Unterscheidung der beiden Klebstoffstreifen 4 wird der Klebstoffstreifen 4 auf der Trägeroberseite 3a nachfolgend als Klebstoffstreifen 4a bezeichnet, wohingegen der Klebstoffstreifen 4 auf der Trägerunterseite 3b das Bezugszeichen 4b trägt. Der jeweilige Klebstoffstreifen 4 bzw. 4a, 4b nimmt im Rahmen des Beispiels und nicht einschränkend zwischen ca. 5% und 50% der Gesamtfläche der zugehörigen Trägerseite 3a, 3b ein. Im in der Fig. 2 gezeigten Beispiel verfügt der Träger 3 nicht einschränkend über eine Gesamtbreite A von ca. 20 mm. Der Klebstoffstreifen 4a an der Trägeroberseite 3a mag eine Breite S von ca. 8 mm aufweisen. Auf diese Weise ist ein Klebstoffstreifen 4 realisiert, der im Beispielfall nach Fig. 2 ca. 40% der Fläche der zugehörigen Trägerseite bzw. der Trägeroberseite 3a bedeckt.

Im Ausführungsbeispiel sind zwei Klebstoffstreifen 4 bzw. der Klebstoffstreifen 4a an der Trägeroberseite 3a und der Klebstoffstreifen 4b an der Trägerunterseite 3b realisiert. Die beiden Klebstoffstreifen 4a, 4b verfügen über eine jeweilige Breite S von 8 mm im Vergleich zur Gesamtbreite A von 20 mm des Trägers 3. Das ist selbstverständlich nur beispielhaft und nicht einschränkend zu verstehen (vgl. Fig. 2).

Außerdem sind die Klebstoffstreifen 4 bzw. 4a, 4b jeweils in Längsrichtung und randseitig des Trägers 3 angeordnet. D. h., der jeweilige Klebstoffstreifen 4; 4a, 4b erstreckt sich jeweils vom Trägerrand 5a, 5b des Trägers 3 in Richtung auf eine Trägermitte 6. Die Trägermitte 6 definiert wegen des bandförmigen bzw. rechteckigen Charakters des Trägers 3 zugleich eine Bandlängsachse 6. Die Bandlängsachse 6 stellt die Spiegelsymmetrieachse des Klebebandes 2 nach Fig. 2 im Ganzen dar. Man erkennt, dass die beiden Klebstoffstreifen 4a, 4b an sich gegenüberliegenden Trägerrändern 5a, 5b des Trägers 3 wie in Fig. 2 dargestellt angeordnet sind.

Außerdem besitzen die beiden Klebstoffstreifen 4a, 4b eine im Wesentlichen übereinstimmende Breite S, die im Ausführungsbeispiel ca. 40% der Fläche der zugehörigen Trägerseite 3a, 3b bedeckt. Die beiden Klebstoffstreifen 4a, 4b sind aus einer übereinstimmenden Klebstoffmasse hergestellt. Tatsächlich hat sich an dieser Stelle ein Schmelzklebstoff auf vorzugsweise Kautschukbasis als besonders günstig erwiesen. Im Detail mag es sich um einen Synthesekautschukkleber handeln.

Zwischen den beiden Klebstoffstreifen 4a, 4b erkennt man im Querschnitt des Klebebandes 2 einen Freibereich F des Trägers 3. Das heißt, die beiden Klebstoffstreifen 4a, 4b weisen im Querschnitt keinen Überlapp zueinander auf. Vielmehr ist ein Versatz zu beobachten. Der Freibereich F ist symmetrisch zu der Bandlängsachse 6 ausgebildet und seinerseits als Freibereichsstreifen ausgelegt. Bei dem Träger 3 kann es sich um jedweden geeigneten Träger 3 zur Aufnahme der Klebstoffmasse handeln. Tatsächlich mag im Beispielfall ein Gewebeträger aus einem Polyestergewebe zum Einsatz kommen. Dieser Träger mag typischerweise eine Banddicke von ca. 0,2 mm aufweisen.

Um nun das mit Bezug zur Fig. 2 im Detail dargestellte Klebeband 2 bzw. die Klebebänder 2 der Fig. 3 bis 5 und 6 im Einzelnen herstellen zu können, wird die in der Fig. 1 schematisch dargestellte Vorrichtung eingesetzt. Diese Vorrichtung verfügt zunächst einmal über eine Vorratseinheit 7 für die bereits angesprochene Trägerbahn 1. Bei der Vorratseinheit 7 handelt es sich schlicht und ergreifend um eine Vorratswickelrolle, auf welcher die Trägerbahn 1, im vorliegenden Fall also das Polyestergewebe, aufgewickelt ist. Die Trägerbahn 1 verfügt über eine Breite, welche ein Mehrfaches der Gesamtbreite A des Klebebandes 2 aufweist oder aufweisen kann. Tatsächlich kann die Trägerbahn 1 beispielsweise eine Breite von 3 A bis 20 A mit A der Breite des Klebebandes 2 besitzen. Dementsprechend muss dann eine ausgangsseitig der Vorrichtung vorgesehene Schneideinrichtung 8 dafür sorgen, dass die Trägerbahn 1 in die beschriebene Anzahl an Klebebändern 2 unterteilt wird und auch unterteilt werden kann.

Zu diesem Zweck ist die Schneidvorrichtung 8 im dargestellten Beispielfall als Messerbalken 8a ausgeführt, welcher in seiner Längserstreckung mehrere rotierende Messer 8b trägt. Zwischen den einzelnen rotierenden Messern 8b wird jeweils ein Klebeband 2 definiert. Die Schneidvorrichtung 8 bzw. der Messerbalken 8a erstreckt sich quer zur Längserstreckung der Trägerbahn 1. Das ist in der perspektivischen Ansicht gemäß Fig. 1 dargestellt.

Neben der Vorratseinheit 7 und der bereits behandelten Schneidvorrichtung 8 gehört zum grundsätzlichen Aufbau der Vorrichtung nach Fig. 1 noch wenigstens eine Beschichtungseinheit bzw. Düse 9, 10, mit deren Hilfe der eine oder die mehreren Klebstoffstreifen 4; 4a, 4b auf den Träger 3 respektive die Trägerbahn 1 aufgebracht werden. Im Ausführungsbeispiel sind zwei Düsen bzw. Beschichtungseinheiten 9, 10 vorgesehen, die sich gegenüberliegend angeordnet sind und unterschiedliche Seiten der Trägerbahn 1 beaufschlagen.

Tatsächlich wird mit Hilfe der Düse 9 eine Trägerbahnoberseite 1a mit dem einen oder den mehreren Klebstoffstreifen 4; 4a ausgerüstet, wohingegen die Düse 10 zur Beschichtung einer gegenüberliegenden Trägerbahnunterseite 1 b dient. Die Trägerbahnoberseite 1a der Trägerbahn 1 definiert nach Passieren der Schneidvorrichtung 8 die Trägeroberseite 3a des Trägers 3 bzw. des dann hergestellten Klebebandes 2. Die Trägerbahnunterseite 1 b der Trägerbahn 1 gehört dagegen zur Trägerunterseite 3b des Trägers 3 bzw. des Klebebandes 2 im Anschluss an die Schneidvorrichtung 8.

Die jeweilige Düse 9, 10 erstreckt sich quer im Vergleich zur Längserstreckung der Trägerbahn 1. Außerdem ist der jeweiligen Düse 9, 10 eine Führungsrolle 11 bzw. 12 zugeordnet. Mit Hilfe dieser beiden Führungsrollen 11, 12 respektive weiterer Führungsrollen 13 wird sichergestellt, dass die Trägerbahn 1 im Bereich der zugehörigen Düse 9, 10 im Wesentlichen vertikal oder nahezu vertikal geführt wird. Auf diese Weise lassen sich die einzelnen Klebstoffstreifen 4; 4a, 4b unschwer auf der Trägerbahn 1 realisieren. Tatsächlich wird die Trägerbahn 1 in Vorschubrichtung bzw. Transportrichtung R über die Führungsrollen 13 bzw. 11, 12 ausgehend von der Vorratseinheit 7 geführt. Dabei passiert die Trägerbahn 1 die jeweilige Düse 9, 10 in im Wesentlichen senkrechter Anordnung, so dass der aus der Düse 9, 10 jeweils austretende Klebstoff den einen oder die mehreren Klebstoffstreifen 4; 4a, 4b im Anschluss an die jeweilige Düse 9, 10 auf der Trägerbahn 1 beschreibt.

Die beiden Düsen 9, 10 sind mit einem vorgegebenen Abstand voneinander und hintereinander in Transportrichtung R der Trägerbahn 1 angeordnet. Dabei ist der Abstand der beiden Düsen 9, 10 zueinander so bemessen, dass der Klebstoffstreifen 4; 4a, 4b so beschaffen ist, dass er komplett auf der Trägerbahn 1 haften bleibt. Der Kleber bzw. Klebstoffstreifen 4; 4a, 4b kann beispielsweise kalt sein oder ausgehärtet (durch Vernetzen), bevor er mit einer nachfolgenden Führungsrolle 11, 12, 13 in Berührung kommt.

Wie bereits erläutert, ist die Düse 9 der Trägerbahnoberseite 1a zugeordnet und sorgt dafür, dass auf der Trägerbahn 1 mehrere Klebstoffstreifen 4a definiert werden. Zwischen den einzelnen Klebstoffstreifen 4a der jeweiligen Streifenbreite S beobachtet man einen Abstand F + S mit Bezug zu der Fig. 2. Dann schließt sich ein weiterer zweiter Klebstoffstreifen 4a des benachbarten und in der Schneidvorrichtung 8 abzutrennenden weiteren Klebebandes 2 an. Dieses weitere Klebeband 2 ist in der Fig. 2 strichpunktiert angedeutet und von dem durchgezogen dargestellten Klebeband 2 durch eine Schneidkante 19 getrennt.

Die Trägerbahn 1 wird im Wesentlichen vertikal oder nahezu vertikal entlang der demgegenüber quer erstreckten Düsen 9, 10 geführt. Dabei ist darauf zu achten, dass sich die Trägerbahn 1 gegenüber den Düsen 9, 10 nicht oder größtenteils nicht verschiebt. Grundsätzlich können die Düsen 9, 10 gegenüber der Trägerbahn 1 auch eine andere Anordnung aufweisen. Wichtig ist, dass zwischen dem Auftrag der Klebstoffstreifen 4; 4a, 4b und dem anschließenden Schneiden der genannte Klebstoffstreifen 4; 4a, 4b nicht "verläuft". Nur dann kann exakt am Klebstoffrand geschnitten werden. Das heißt, auf die Trägerbahnoberseite 1a bzw. die Trägeroberseite 3a gemünzt bedeutet dies, dass der Abstand der jeweiligen hier erzeugten Klebstoffstreifen 4a entlang der gesamten Trägerbahn 1 jeweils F + S beträgt. Dadurch ist sichergestellt, dass nach Passieren der Schneidvorrichtung 8 der Klebstoffstreifen 4a exakt mit dem Trägerrand 5b des Trägers 3 in Deckung ist. Vergleichbare Überlegungen gelten natürlich auch für den Klebstoffstreifen 4b auf der Trägerunterseite 3b.

Die Düse 9, 10 verfügt über eine Querausdehnung, welche an die Breite der Trägerbahn 1 angepasst ist. Außerdem ist die jeweilige Düse 9, 10 mit einer ausgangsseitigen Schablone ausgerüstet. Mit Hilfe dieser Schablone werden die Breite und/oder die Position des hiermit jeweils erzeugten Klebstoffstreifens 4a, 4b auf dem zugehörigen Träger 3 vorgegeben. Das heißt, die Schablone spiegelt mit Bezug zur Trägerbahnoberseite 1a bzw. der Trägeroberseite 3a die Position der einzelnen beabstandet zueinander verlaufenden Klebstoffstreifen 4a wider.

Ausgangsseitig der in Fig. 1 dargestellten Vorrichtung ist noch ein sogenannter Wendewickler 14 realisiert. Dieser Wendewickler 14 verfügt über eine Tragscheibe 15, auf der einzelne Wellen 16 zur Aufnahme von Klebebandrollen 17 angeordnet sind. Nachdem im Anschluss an die Schneidvorrichtung 8 die Klebebänder 2 hergestellt worden sind, werden die einzelnen Klebebänder 2 auf die zugehörigen Klebebandrollen 17 aufgewickelt. Sind die Klebebandrollen 17 voll, so wird der Wendewickler 15 gedreht, damit auf der anderen gegenüberliegenden Seite der Tragscheibe 15 befindliche und bisher leere Klebebandrollen 17 im Anschluss hieran als Aufnahme für die Klebebänder 2 fungieren können.

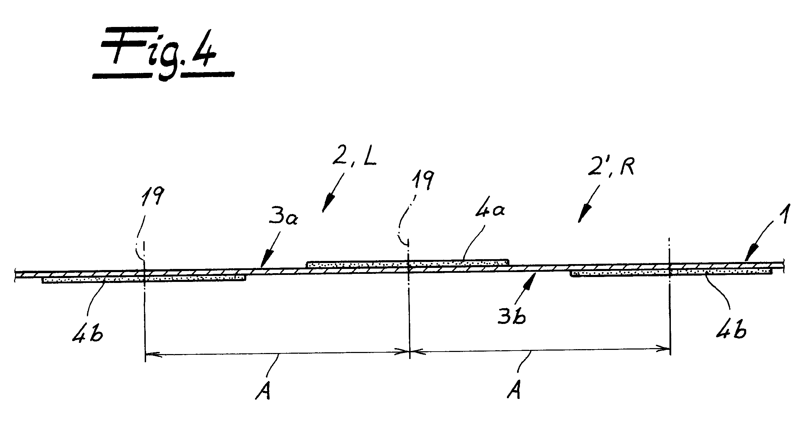

Mit Hilfe des Wendewicklers 14 können insgesamt gegenläufige aber auch gleichläufige Wickel des Klebebandes 2 bzw. der jeweiligen Klebebänder 2 hergestellt werden. Selbstverständlich sind auch mehrere Wendewickler 14 denkbar, wobei in diesem Kontext auch Tragscheiben 15 mit unterschiedlicher Rotationsrichtung realisiert werden können. Dadurch lassen sich beispielsweise ausgehend von einer Trägerbahn entsprechend der Fig. 4 Links- und Rechtswickel-Versionen des zugehörigen Klebebandes 2 verwirklichen, das heißt sowohl gegenläufige als auch gleichläufige Wickel.

Schließlich erkennt man in der Vorrichtung nach Fig. 1 noch eine bzw. zwei Vernetzungseinheiten 18. Diese beiden Vernetzungseinheiten 18 befinden sich vor der Schneidvorrichtung 8 und in Transportrichtung R hinter den beiden Düsen 9, 10. Mit Hilfe der beiden Vernetzungseinheiten 18 werden einerseits der Klebstoffstreifen 4a an der Trägerbahnoberseite 1 a bzw. der Trägeroberseite 3a und andererseits der Klebstoffstreifen 4b an der Trägerbahnunterseite 1 b bzw. der Trägerunterseite 3b bei Bedarf vernetzt. Zu diesem Zweck mag es sich bei den beiden Vernetzungseinheiten 18 jeweils um UV-Lampen im Beispielfall handeln. Diese sind typischerweise direkt hinter der jeweiligen Düse 9, 10 angeordnet, um eine Berührung mit den anschließenden Führungsrollen 12, 13 bzw. 11, 13 mit unvernetztem Kleber zu verhindern. Die fraglichen Führungsrollen 12, 13 bzw. 11, 13 sind im Allgemeinen standardmäßig kleberabweisend ausgerüstet. Außerdem kann die Vernetzungseinheit 18 auch örtlich entfernt und außerhalb der eigentlichen Vorrichtung platziert werden. In diesem Fall lässt sich das UV-Licht beispielsweise über einen optischen Leiter an die gewünschte Stelle bringen. Im Rahmen des gezeigten Beispielfalls sind die beiden Vernetzungseinheiten 18 gegenüberliegend angeordnet, wobei das Trägerband 1 zwischen beiden Vernetzungseinheiten 18 hindurchgeführt wird.

Andere Möglichkeiten zur Herstellung des Klebebandes 2 werden in den Fig. 3 bis 5 zeichnerisch dargestellt. So erkennt man in der Fig. 3 eine Variante, bei der die beschichtete Trägerbahn 3 nicht kantengenau geschnitten wird, wie dies in der Fig. 2 dargestellt ist. Vielmehr wird die beschichtete Trägerbahn 1 im Bereich des zugehörigen Klebstoffstreifens 4; 4a, 4b geschnitten. So erkennt man anhand der Fig. 3, dass eine jeweilige Schneidkante 19 randseitig des zugehörigen Klebstoffstreifens 4a, 4b - aber noch innerhalb des Klebstoffstreifens 4a, 4b - definiert wird. Dadurch entsteht zwischen benachbarten Klebstoffstreifen 4a, 4b ein Überschuss bzw. Abfallbereich 20. Dieser Überschuss bzw. Abfallbereich 20 kann bewusst in Kauf genommen werden, um etwaige Ungenauigkeiten bei der Herstellung der Klebstoffstreifen 4; 4a, 4b im Kantenbereich auszugleichen. Darüber hinaus lässt sich aus dem Abfallbereich 20 selbstverständlich auch eine "normale" Klebebandrolle bzw. ein eigenes Klebeband 2 produzieren. Dieses kann von den übrigen Klebebändern 2 separiert werden. Dennoch stehen nach dem Schneidevorgang Klebebänder 2 der gewünschten Breite A ebenfalls zur Verfügung.

Bei der Variante nach der Fig. 4 wird die beschichtete Trägerbahn 1 ebenfalls im Bereich des gewünschten Klebstoffstreifens 4; 4a, 4b geschnitten. Tatsächlich erkennt man, dass die Schneidkante 19 jeweils mittig des Klebstoffstreifens 4; 4a, 4b definiert wird. Auf diese Weise können benachbarte Klebebänder 2, 2' hergestellt werden. Das Klebeband 2 und das Klebeband 2' werden dabei im Beispielfall mit jeweils gegenläufiger Wickelrichtung auf eine nicht dargestellte Rolle aufgewickelt. Das ist durch einen entsprechenden Zusatz "L" für eine Linkswicklung und "R" für eine Rechtswicklung in der Fig. 4 angedeutet. Selbstverständlich lassen sich auf diese Weise auch nur Klebebänder 2, 2' für eine Linkswicklung oder auch nur solche für eine Rechtswicklung prinzipiell produzieren.

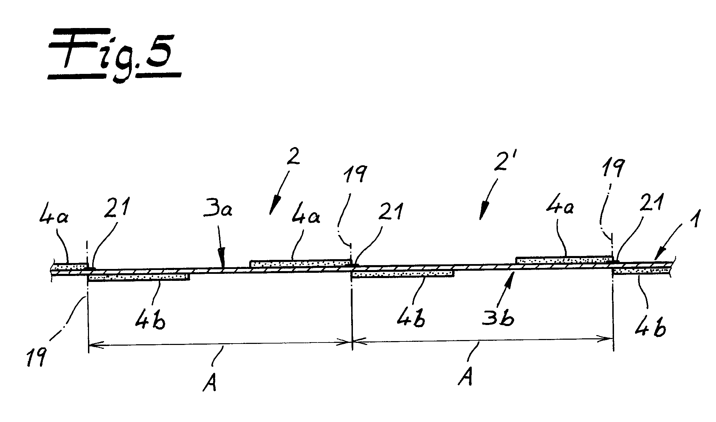

Die Fig. 5 zeigt eine weitere Variante beim Schneidevorgang. Hier ist im Schnittbereich bzw. im Bereich der Schneidkante 19 zunächst auf den Träger bzw. die Trägerbahn 1 eine nicht klebende Beschichtung 21 aufgebracht worden. Erst im Anschluss hieran wird der Klebstoffstreifen 4a, 4b aufgetragen.

Auf diese Weise beobachtet man im Bereich der Schneidkante 19 einen besonders sauberen Schnitt und insbesondere keine "ausgefranste" Trägerbahn 3.

Denn bei dem Träger 3 handelt es sich typischerweise um einen Gewebeträger, so dass im Bereich (einer nicht mit einem Klebstoff beschichteten) Schneidkante 19 die Gefahr besteht, dass an dieser Stelle Fäden aus der Trägerbahn 1 austreten oder beim Schneidvorgang herausgerissen oder gezogen werden. Das ist mit der zusätzlichen und meistens nicht klebenden Beschichtung 21 im Schnittbereich bzw. im Bereich der Schneidkante 19 nicht der Fall. Tatsächlich wird die fragliche nicht klebende Beschichtung 21 im Bereich der Schneidkante 19 auf die Trägerbahn 1 aufgebracht, bevor der eigentliche Klebstoffstreifen 4; 4a, 4b mit Hilfe der Beschichtungseinheit bzw. der Düsen 9, 10 aufgetragen wird.

Zu diesem Zweck mag eine weitere dritte Düse den beiden Düsen 9, 10 vorgeschaltet sein, die dafür sorgt, dass die nicht klebende Beschichtung 21 auf die Trägerbahn 1 aufgebracht wird. Im Ausführungsbeispiel nach der Fig. 5 erkennt man, dass die nicht klebende Beschichtung 21 lediglich an der Trägeroberseite 3a vorgesehen ist, weil von dieser Trägeroberseite 3a her die Messer des an dieser Stelle realisierten Messerbalken 8 in die Trägerbahn 1 eintauchen. Grundsätzlich kann die fragliche Beschichtung 21 natürlich auch nur auf der Trägerunterseite 3b oder auf der Trägeroberseite 3a und Trägerunterseite 3b angebracht werden. Das hängt von dem anschließenden Schneidvorgang bzw. der Auslegung der Schneidvorrichtung 8 ab.

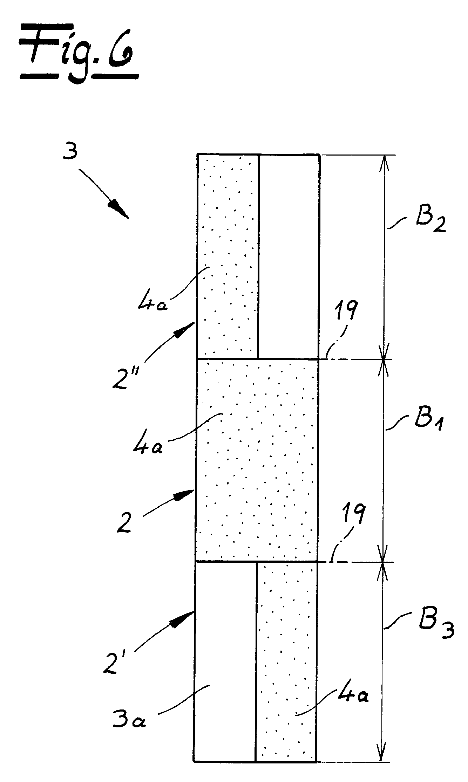

Die Fig. 6 zeigt schließlich eine Trägerbahn 1, die in ihrer Längserstreckung mit unterschiedlichen Klebstoffstreifen 4; 4a, 4b ausgerüstet ist, und zwar im Beispielfall auf ihrer Trägeroberseite 3a. Grundsätzlich ist eine vergleichbare Ausprägung auch auf der Trägerunterseite 3b sowie auf beiden Trägerseiten 3a, 3b denkbar. Man erkennt, dass die Trägerbahn 1 in ihrer Längserstreckung in wenigstens einem Bereich B₁ vollflächig beschichtet wird bzw. beschichtet ist. Ein weiterer zweiter Bereich B₂ bzw. B₃ verfügt über eine teilflächige Beschichtung. Das heißt, hier bedeckt der jeweilige Klebstoffstreifen 4a im Beispielfall nur einen Teil der Trägerbahn 1.

Die einzelnen Bereiche B₁, B₂ und B₃ der Trägerbahn 1 in ihrer Längserstreckung korrespondieren zu unterschiedlichen Klebebändern 2, 2' und 2". Um diese Klebebänder 2, 2' und 2" voneinander zu separieren, sind vorliegend Schneidkanten 19 vorgesehen, die im Vergleich zur Trägerbahn 1 in Querrichtung verlaufen. Das heißt, die Trägerbahn 1 wird zur Herstellung der einzelnen Klebebänder 2, 2' und 2" in Querrichtung geschnitten.

## Patentansprüche

1. Verfahren zur Herstellung eines Klebebandes (2), mit einem bandförmigen Träger (3), und mit zumindest einem Klebstoffstreifen (4; 4a, 4b), welcher wenigstens einseitig auf den Träger (3) aufgebracht wird, mit folgenden Verfahrensschritten:
1.1) eine Trägerbahn (1) wird von einer Vorratseinheit (7) ausgehend zumindest einer Beschichtungseinheit (9, 10) zugeführt;
1.2) die Beschichtungseinheit (9, 10) erzeugt auf der Trägerbahn (1) in ihrer Längserstreckung den wenigstens einen Klebstoffstreifen (4; 4a, 4b) durch Beschichten mit einem Kleber; wobei
1.3) der Kleber kontaktlos auf die Trägerbahn (1) aufgebracht wird;
1.4) die Trägerbahn (1) wird in Längsrichtung in die einzelnen Klebebänder (2) geschnitten, wobei die Schritte 1.2) und 1.4) auch in umgekehrter Reihenfolge durchlaufen werden können;
**dadurch gekennzeichnet, dass**
1.5) die Trägerbahn (1) im Bereich der Beschichtungseinheit (9, 10) im Wesentlichen vertikal oder nahezu vertikal geführt wird.

2. Verfahren nach Anspruch 1, **dadurch gekennzeichnet, dass** die Beschichtungseinheit (9, 10) und die Trägerbahn (1) relativ zueinander bewegt werden.

3. Verfahren nach einem der Ansprüche 1 oder 2, **dadurch gekennzeichnet, dass** zwei Beschichtungseinheiten (9, 10) realisiert sind, die den Träger (3) gemeinsam auf einer Trägerseite (3a, 3b) und/oder auf einer Trägeroberseite (3a) und einer Trägerunterseite (3b) beschichten.

4. Verfahren nach einem der Ansprüche 1 bis 3, **dadurch gekennzeichnet, dass** die Beschichtungseinheit (9, 10) als Düse (9, 10), Sprüheinheit, Gießeinheit etc. ausgebildet ist.

5. Verfahren nach einem der Ansprüche 1 bis 4, **dadurch gekennzeichnet, dass** die beschichtete Trägerbahn (1) so geschnitten wird, dass gegenläufige und/oder gleichläufige Wickel des Klebebandes (2) erzeugt werden.

6. Verfahren nach einem der Ansprüche 1 bis 5, **dadurch gekennzeichnet, dass** die beschichtete Trägerbahn (1) kantengenau geschnitten wird.

7. Verfahren nach einem der Ansprüche 1 bis 6, **dadurch gekennzeichnet, dass** die beschichtete Trägerbahn (1) im Bereich des Klebstoffstreifens (4; 4a, 4b), beispielsweise mittig des Klebstoffstreifens (4; 4a, 4b), geschnitten wird.

8. Verfahren nach einem der Ansprüche 1 bis 7, **dadurch gekennzeichnet, dass** im Bereich einer Schneidkante (19) eine beispielsweise nicht klebende Beschichtung (21) vor dem Aufbringen des Klebstoffstreifens (4; 4a, 4b) aufgetragen wird.

9. Verfahren nach einem der Ansprüche 1 bis 9, **dadurch gekennzeichnet, dass** die Trägerbahn (1) in ihrer Längserstreckung mit unterschiedlichen Klebstoffstreifen (4; 4a, 4b) auf ihrer Trägeroberseite 3a und/oder Trägerunterseite (3b) beschichtet wird.

10. Verfahren nach Anspruch 9, **dadurch gekennzeichnet, dass** die Trägerbahn (1) in ihrer Längserstreckung in wenigstens einem Bereich (B₁) vollflächig und in zumindest einem weiteren Bereich (B₂, B₃) teilflächig mit dem Kleber beschichtet wird.

11. Verfahren nach Anspruch 10, **dadurch gekennzeichnet, dass** die einzelnen Bereiche (B₁, B₂, B₃) in Längserstreckung der Trägerbahn (1) zu unterschiedlichen Klebebändern (2, 2' und 2") korrespondieren.

12. Verfahren nach einem der Ansprüche 1 bis 11, **dadurch gekennzeichnet, dass** die Trägerbahn (1) in Längsrichtung und/oder Querrichtung geschnitten wird.

13. Verfahren nach einem der Ansprüche 1 bis 12, **dadurch gekennzeichnet, dass** der eine oder die mehreren Wickel in einzelne Klebebandrollen unterteilt, beispielsweise gestochen, werden.

## Claims

1. A method for producing an adhesive tape (2) comprising a tape-shaped carrier (3) and at least one adhesive strip (4; 4a, 4b) applied onto the carrier (3) on at least one face, comprising the following method steps:
1.1) a carrier web (1) is fed from a supply unit (7) to at least one coating unit (9, 10);
1.2) the coating unit (9, 10) generates on the carrier web (1) in the longitudinal extent thereof the at least one adhesive strip (4; 4a, 4b) by coating with an adhesive, wherein
1.3) the adhesive is applied onto the carrier web (1) in a contactless manner;
1.4) the carrier web (1) is cut in the longitudinal direction into individual adhesive tapes (2), wherein the steps 1.2) and 1.4) can also be carried out in reverse order;
**characterized in that**
1.5) the carrier web (1) is guided substantially vertically or almost vertically in the area of the coating unit (9, 10).

2. The method according to claim 1, **characterized in that** the coating unit (9, 10) and the carrier web (1) can be moved relative to one another.

3. The method according to claim 1 or 2, **characterized in that** two coating units (9, 10) are implemented which jointly coat the carrier (3) on one carrier face (3a, 3b) and/or on a carrier upper face (3a) and a carrier lower face (3b).

4. The method according to any one of claims 1 to 3, **characterized in that** the coating unit (9, 10) is configured as a nozzle (9, 10), spraying unit, pouring unit, etc..

5. The method according to any one of claims 1 to 4, **characterized in that** the coated carrier web (1) is cut in such a manner that opposite and/or synchronous coils of the adhesive tape (2) are produced.

6. The method according to any one of claims 1 to 5, **characterized in that** the coated carrier web (1) is cut exactly true to edge.

7. The method according to any one of claims 1 to 6, **characterized in that** the coated carrier web (1) is cut in the area of the adhesive strip (4; 4a, 4b), for example in the middle of the adhesive strip (4; 4a, 4b).

8. The method according to any one of claims 1 to 7, **characterized in that** in the area of a cut edge (19), for example, a nonstick coating (21) is applied before applying the adhesive strip (4; 4a, 4b).

9. The method according to any one of claims 1 to 9, **characterized in that** the carrier web (1), in its longitudinal extent, is coated with different adhesive strips (4; 4a, 4b) on its carrier upper face (3a) and/or carrier lower face (3b).

10. The method according to claim 9, **characterized in that** the carrier web (1), in its longitudinal extent, is coated at least in one area (B₁) over the entire surface and at least in one further area (B₂, B₃) over a partial surface with the adhesive.

11. The method according to claim 10, **characterized in that** the individual areas (B₁, B₂, B₃) correspond to different adhesive tapes (2, 2' and 2'') in the longitudinal extent of the carrier web (1).

12. The method according to any one of claims 1 to 11, **characterized in that** the carrier web (1) is cut in the longitudinal direction and/or transverse direction.

13. The method according to any one of claim 1 to 12, **characterized in that** the one or the plurality of coils are subdivided, for example punched, into individual adhesive tape rolls.

## Revendications

1. Procédé destiné à la fabrication d'un ruban adhésif (2), avec un support en forme de bande (3) et avec au moins une bande adhésive (4 ; 4a, 4b), laquelle est appliquée sur au moins une face du support (3), avec les étapes de procédé suivantes :
1.1) une bande support (1) est amenée depuis une unité de réserve (7) vers au moins une unité de revêtement (9, 10),
1.2) l'unité de revêtement (9, 10) génère sur la bande support (1) dans son extension longitudinale au moins une bande adhésive (4 ; 4a, 4b) par enduction d'un adhésif,
1.3) l'adhésif étant appliqué sans contact sur la bande support (1),
1.4) la bande support (1) est découpée dans le sens longitudinal en rubans adhésifs individuels (2), les étapes 1.2) et 1.4) pouvant se dérouler également dans le sens inverse,
**caractérisé en ce que**
1.5) la bande support (1) est guidée pour l'essentiel verticalement ou presque verticalement dans la zone de l'unité de revêtement (9, 10).

2. Procédé selon la revendication 1, **caractérisé en ce que** l'unité de revêtement (9, 10) et la bande support (1) sont déplacées l'une par rapport à l'autre.

3. Procédé selon l'une quelconque des revendications 1 ou 2, **caractérisé en ce que** deux unités de revêtement (9, 10) sont réalisées, qui enduisent le support (3) en même temps sur la face de support (3a, 3b) et/ou sur la face supérieure de support (3a) et une face inférieure du support (3b).

4. Procédé selon l'une quelconque des revendications 1 à 3, **caractérisé en ce que** l'unité de revêtement (9, 10) est constituée comme buse (9, 10), unité de pulvérisation, unité de coulée etc.

5. Procédé selon l'une quelconque des revendications 1 à 4, **caractérisé en ce que** la bande support enduite (1) est découpée de telle manière que des enroulements opposés et/ou dans le même sens du ruban adhésif (2) sont produits.

6. Procédé selon l'une quelconque des revendications 1 à 5, **caractérisé en ce que** la bande support enduite (1) est coupée exactement au bord.

7. Procédé selon l'une quelconque des revendications 1 à 6, **caractérisé en ce que** la bande support enduite (1) est coupée dans la zone de la bande adhésive (4 ; 4a, 4b), par exemple au centre de la bande adhésive (4 ; 4a, 4b).

8. Procédé selon l'une quelconque des revendications 1 à 7, **caractérisé en ce que** dans la zone d'un bord de coupe (19), un revêtement par exemple non adhésif (21) est appliqué avant l'application de la bande adhésive (4 ; 4a, 4b).

9. Procédé selon l'une quelconque des revendications 1 à 9, **caractérisé en ce que** la bande support (1) est enduite dans son extension longitudinale avec une bande adhésive (4 ; 4a, 4b) sur sa face supérieure de support (3a) et/ou sa face inférieure de support (3b).

10. Procédé selon la revendication 9, **caractérisé en ce que** la bande support (1) est enduite d'adhésif dans son extension longitudinale dans au moins une zone (B₁) sur toute la surface et dans au moins une autre zone (B₂, B₃) sur une surface partielle.

11. Procédé selon la revendication 10, **caractérisé en ce que** les zones individuelles (B₁, B₂, B₃) correspondent dans l'extension longitudinale de la bande support (1) à des rubans adhésifs différents (2, 2' et 2'').

12. Procédé selon l'une quelconque des revendications 1 à 11, **caractérisé en ce que** la bande support (1) est coupée dans le sens longitudinal et/ou transversal.

13. Procédé selon l'une quelconque des revendications 1 à 12, **caractérisé en ce qu'**un ou plusieurs enroulements sont subdivisés, par exemple percés, en rouleaux individuels de ruban adhésif.
